# EUROPEAN PATENT SPECIFICATION

(11) **EP 4 644 510 B1**
(45) Date of publication and mention of the grant of the patent: **15.07.2026**
(21) Application number: 24305671.0
(22) Date of filing: 29.04.2024
(51) Int. Cl.: C10G 1/00, B01D 3/14, B01D 3/38, B01D 19/00, C10G 1/10, C10G 9/36, C10G 31/08, C10J 3/72

(54) **STEAM-ENVIRONMENT CHEMICAL PROCESSING FOR PURIFYING PYROLYSIS-BASED OIL**
CHEMISCHE VERARBEITUNG EINER DAMPFUMGEBUNG ZUR REINIGUNG VON PYROLYSEBASIERTEM ÖL
TRAITEMENT CHIMIQUE À L'ENVIRONNEMENT DE LA VAPEUR POUR PURIFIER UNE HUILE À BASE DE PYROLYSE

(43) Date of publication of application: 05.11.2025
(73) Proprietor: Technip Energies France, 92741 Nanterre Cedex (FR)
(72) Inventor: Kultschar, Michael, 92741 Nanterre Cedex (FR); Cook, Timothy, 92741 Nanterre Cedex (FR); Reich, Veronique, 92741 Nanterre Cedex (FR); Wanders, Mark, 92741 Nanterre Cedex (FR); Tardy, Audrey, 92741 Nanterre Cedex (FR); Starr, James, 92741 Nanterre Cedex (FR)
(74) Representative: Edson, Russell Gregory

(56) References cited:
- WO-A1-2018/025103
- US-A1- 2019 375 991
- US-A1- 2023 272 293
- US-A1- 2023 313 047

## Description

### Technical Field

The present disclosure relates generally to chemical processing and, more particularly (although not necessarily exclusively), to purifying hydrocarbon material, such as olefins, from plastic waste via chemical processing, such as fractionation, in a steam environment.

### Background

Massive amounts of plastic waste are generated every year. Incinerating the plastic waste can be wasteful and can be harmful to the environment by releasing excessive amounts of greenhouse gasses into the atmosphere. Recycling plastic waste may reduce damage to the environment. But, the plastic waste may have contaminants that prevent the plastic waste from being processed or otherwise recycled into useful products. Additionally, it may be difficult to remove the contaminants or otherwise purify the plastic waste to facilitate processing or recycling the plastic waste.

US2023/0272293 discloses a system and a method for generating a steamcracker feed.

### Summary

The system and the method according to the invention are defined in the appended claims.

### Brief Description of the Drawings

FIG. 1 is a block diagram of an advanced recycling system that can be used to generate purified steam cracker feedstock according to some examples of the present disclosure.
FIG. 2 is a flowchart of a process for generating purified steam cracker feedstock based on fractionating and washing hydrogenated hydrocarbon material in a steam environment according to some examples of the present disclosure.
FIG. 3 is a diagram of a fractionation module that can be used to fractionate hydrogenated hydrocarbon material in a steam environment to facilitate generating purified steam cracker feedstock according to some examples of the present disclosure.
FIG. 4 is a flowchart of a process for fractionating hydrogenated hydrocarbon material in a steam environment according to some examples of the present disclosure.
FIG. 5 is a diagram of a water wash module that can be used to generate purified steam cracker feedstock according to some examples of the present disclosure.
FIG. 6 is a flowchart of a process for generating purified steam cracker feedstock using a water wash module according to some examples of the present disclosure.

### Detailed Description

Certain aspects and features of the present disclosure relate to generating purified steam cracker feedstock by fractionating hydrogenated hydrocarbon material in a steam environment. A steam cracker, one of the intended recipients of the purified steam cracker feedstock, may be or include a furnace that can convert saturated hydrocarbon material into unsaturated hydrocarbon material that can be used as monomers, as solvents, as fuel, and for any other suitable purposes. Steam cracker feedstock may be or include the saturated hydrocarbon material that can be input into the steam cracker for generating the unsaturated hydrocarbon material. The steam cracker feedstock may be purified to enhance a quality, a usefulness, and the like of the unsaturated hydrocarbon material. Fractionation may be or include a process of separating hydrogenated hydrocarbon material into separate components. For example, the hydrogenated hydrocarbon material can be fractionated to separate the hydrogenated hydrocarbon material into light hydrocarbons and heavy hydrocarbons. The separated light hydrocarbons, along with steam, can undergo a condensation process that can generate purified hydrocarbon material and water, which can remove contaminants from the light hydrocarbons. The hydrogenated hydrocarbon material can be fractionated in a steam environment, for example instead of in a vacuum environment, to reduce a partial pressure of the hydrogenated hydrocarbon material. Reducing the partial pressure of the hydrogenated hydrocarbon material may allow the fractionation process to be performed at a lower temperature, which can improve a quality of output for the fractionation process and can reduce a potential for fouling or polymerization to occur. The output of the fractionation process can be used to generate the purified steam cracker feedstock.

Advanced recycling, which may be or include chemical recycling, can involve techniques that facilitate converting plastic-rich waste, which may include hard-to-recycle types of plastic, into feedstock that can be used as an input for a steam cracker. One particular example of chemical recycling can include a pyrolysis process. Some pyrolysis processes, which may be or include one type of advanced recycling, may produce a hydrocarbon-rich, pyrolysis-based oil. The hydrocarbon-rich stream can include levels of contaminants an order of magnitude higher or more than contaminants typically included in steam cracker feedstock. The contaminated hydrocarbon-rich stream can be blended with large quantities of typical steam cracker feedstock to dilute an overall concentration of contaminants. But, with declining quantities of typical steam cracker feedstock, or with increasing amounts of hydrocarbon-rich, pyrolysis-based oils, diluting the contaminants may become difficult, may become impractical, or may fail to meet a predetermined specification. Additionally or alternatively, the hydrocarbon-rich pyrolysis oil may be lower quality than a quality or purity of conventional steam cracker feedstocks. Feeding the hydrocarbon-rich pyrolysis oil into a steam cracker may result in lower yields of olefins and other high value chemicals such as butadiene.

Increasing advanced recycling volumes can lead to increasingly large quantities of pyrolysis-based oil being fed to steam crackers. The pathway of waste to olefin can involve a purification step to decontaminate the pyrolysis-based oil to improve the quality of the pyrolysis-based oil, which can improve the overall yields of olefin and other high value chemicals achieved by the steam cracker. A process scheme can be provided for decontaminating and otherwise enhancing a quality of (e.g., purifying) the pyrolysis-based oils to allow for increasingly larger flow rates of the pyrolysis-based oil to be used as feedstock for a steam cracker.

Large variations in pyrolysis oil compositions may be possible to be used as an input for a system that can generate purified steam cracker feedstock. The system can include a storage tank, a filtration module, a guard bed, a prefractionation column, a pre-heat train, a hydrogenation module, a fractionation module, a water wash module, any other suitable components for the system, or any combination thereof. The storage tank can involve mixing of plastic-rich waste and other materials to enhance a homogeneity of delivered pyrolysis oils and dampening of composition fluctuations. The mixing can be achieved internally with agitator or by use of continuous recycle via the pumps feeding the system. The filtration module may involve one or more filters, one or more centrifugation modules, and the like to remove solid, wax, or tar content. The guard beds can be used to remove catalyst poisons and for other suitable purposes. The prefractionation column can be used to remove a heavier portion of the pyrolysis-based oil that may include contaminants or other impurities such as metals and tars. The pre-heat train may include heat integration and may provide initial heat levels for the plastic-rich waste.

The hydrogenation module can be used to hydrogenate the plastic-rich waste, which may be or include contaminated hydrocarbon material. The hydrogenation module can be used to convert organic contaminants, such as oxygen, nitrogen, halogenated compounds, and the like, and to saturate at least some olefins or aromatics included in the contaminated hydrocarbon material. A first reactor, or a first set of reactors, of the hydrogenation module may be or include a guard bed to protect a downstream finishing hydrogenation catalyst. In some examples, the hydrogenation module can be positioned proximate to a steam-cracker, and the hydrogenation module can use hydrogen produced by the steam cracker. Additionally or alternatively, the hydrogenation module may involve or include a reactor effluent neutralization and separation drum that can neutralize or remove excess hydrogen, traces of H₂S and NH₃, and the like. Liquid produced from the hydrogenation module can be transmitted to the fractionation module. In some examples, the hydrogenation module may remove chlorines, may saturate olefins, and the like. Additionally or alternatively, silicones, arsenes, and the like that may be included in the plastic waste may remain in the liquid to be removed by the fractionation module, in the heavy hydrocarbon portion, if they are not removed via a hydrogenation catalyst or guard bed.

The fractionation module may be or include a stripper that can operate with a steam environment, for example instead of a vacuum environment. The steam environment can allow a fractionation operation to be performed with a lower partial pressure of hydrocarbons. The lower partial pressure of hydrocarbons can allow the fractionation module to perform the fractionation operation at a lower temperature and with steam stripping in the lower section allows operation without a reboiler. Heavy oil can be recovered as a bottom fraction of the fractionation step, and the heavy oil can include heavy polyaromatics or heteroaromatic compounds that may not have been hydrogenated in one or more upstream reactors. In some examples, the fractionation module can be located proximate to the steam cracker, and the heavy oil can be mixed with the fuel oil generated at the bottom of a primary fractionator within the steam cracker.

The water wash module can be used to remove water from material provided by the fractionation module. The fractionation module can produce steam-diluted hydrocarbon material, which can be received at a neutralizing and decanting system, via a condensing system, referred to as, including, or included in the water wash module, to remove the water, which may include liberated contaminants from the adjusted hydrocarbon material produced from overhead of the fractionation step. The decanting step that can be performed by the water wash module may additionally act as a single wash system (e.g., with one circulation loop), as a double wash system (e.g., with two circulation loops), as a triple wash system (e.g., with three circulation loops), etc. Additionally or alternatively, a set of one or several adsorbent beds, which may involve mercury, unsaturated organic chlorides, silicones, etc., can be included in the water wash module to ensure final polishing of the purified steam cracker feedstock prior to feeding to the steam cracker. The foregoing operations, or any subset thereof, can be performed to ensure appropriate levels of contaminant removal to suitably purify feedstock for a steam cracker.

A system that uses a steam-environment fractionator to generate purified steam cracker feedstock can receive a wide variety of compositions of pyrolysis-based oils from one or more technologies. The system can dampen the effects of swings in delivered compositions to the system and to the steam cracker. The system can remove solid material, contaminants, heavy hydrocarbons, and the like. The system can also convert organic contaminants to a different compound that can be removed. The system can remove a heavy tail of the pyrolysis-based oil to minimize fouling of a convection section of the steam cracker furnace. The system can operate at a reduced fractionation temperature by using a steam environment to reduce partial pressure of hydrocarbons to reduce risk of polymerization of the pyrolysis-based oil. Additionally or alternatively, the steam environment may allow the system to perform fractionation without reboilers in fouling service. The system can involve an efficient, two-stage water decanting system, such as via the water wash module, to minimize risk of contaminant break through and to maximize contaminant removal from the steam-diluted hydrocarbon material. The system can include heat integration, for example throughout the system, to provide optimal energy efficiency. The system can involve the fractionation module being located downstream from the hydrogenation module (i) to use one heat cycle and cool cycle to maximize energy efficiency, and (ii) to inject steam for reducing the partial pressure of hydrocarbon material for the stripping the contaminants from the hydrogenated hydrocarbon material.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

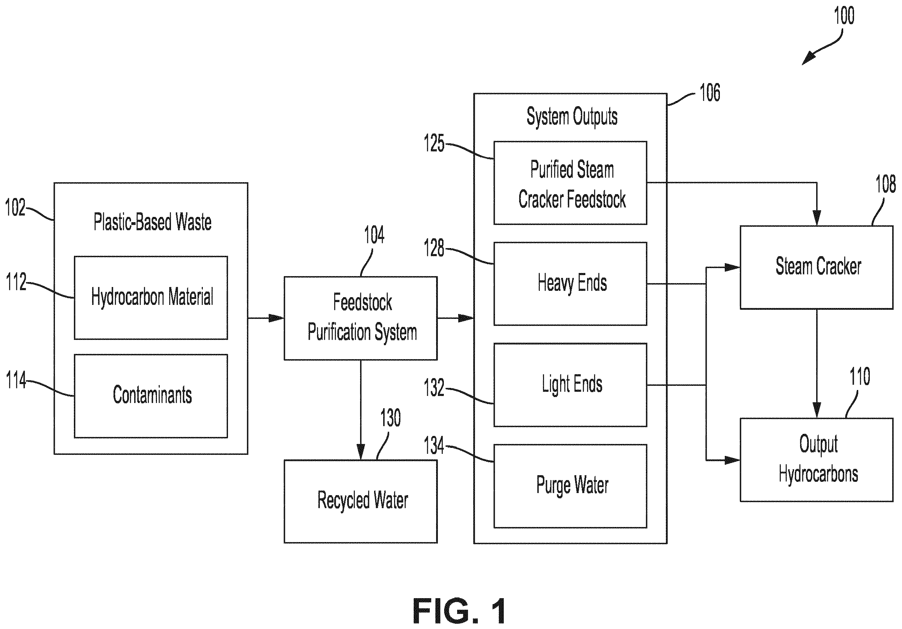

FIG. 1 a block diagram of an advanced recycling system 100 that can be used to generate purified steam cracker feedstock 125 according to some examples of the present disclosure. The advanced recycling system 100 can include plastic-based waste 102, a feedstock purification system 104, system outputs 106, a steam cracker 108, output hydrocarbons 110, and recycled water 130. The plastic-based waste 102 may be or include hydrocarbon-rich waste products such as consumer products, trash, industrial waste, and the like. The plastic-based waste 102 may include hydrocarbon material 112, contaminants 114, and any other suitable material. In some examples, the hydrocarbon material 112 may be heterogeneously mixed (e.g., physically mixed) with the contaminants 114, may be homogeneously mixed (e.g., chemically bonded) with the contaminants 114, or a combination thereof. In a particular example, the plastic-based waste 102 may include hydrocarbon material 112 that is chemically combined with chlorine, nitrogen, oxygen, or any other suitable contaminants included in the contaminants 114. Additionally or alternatively, the plastic-based waste 102 may be physically mixed with heavy oils such as cooking oils, tars, and the like or metals such as mercury, magnesium, iron and the like. The hydrocarbon material 112 may be contaminated saturated hydrocarbon material, partially saturated or partially contaminated hydrocarbon material, unsaturated hydrocarbon material, other suitable types of hydrocarbon material, or any combination thereof.

The plastic-based waste 102 can be collected, for example in a storage container, in a feed pipeline, or the like, and the plastic-based waste 102 can be provided to a feedstock purification system 104. The feedstock purification system 104 can receive the plastic-based waste 102 and can generate one or more different outputs, such as the system outputs 106, based on the plastic-based waste 102. Additionally or alternatively, the feedstock purification system 104 can generate the recycled water 130 that can be recycled, for example as steam. The system outputs 106 can include the purified steam cracker feedstock 125, heavy ends 128 such as heavy hydrocarbons, light ends 132, such as light hydrocarbons, purge water 134, and any other suitable outputs that can be generated by feedstock purification system 104. In some examples, the feedstock purification system 104 can include one or more modules that can perform one or more operations to generate the system outputs 106.

The one or more modules may include a hydrogenation module, a fractionation module, a water wash module, and any other suitable modules that can perform the one or more operations to generate the system outputs 106. The hydrogenation module may be configured to remove large contaminants, to remove easy-to-remove contaminants, and the like by hydrogenating the plastic-based waste 102. The fractionation module may be configured to perform at least a stripping operation on the plastic-based waste 102 in a steam environment to reduce a partial pressure of the hydrocarbon material 112. Reducing the partial pressure of the hydrocarbon material 112 may allow a fractionation operation to be performed on the plastic-based waste 102 at lower temperatures, higher pressures, or a combination thereof compared to that of other fractionation operations that use, or that are used by, other systems. The water wash module may be configured to circulate water with respect to the plastic-based waste 102, for example after the plastic-based waste 102 has been hydrogenated and steam-fractionated, to cause remaining contaminants from the contaminants 114 to be removed from the hydrocarbon material 112. Other suitable modules, such as a filtration module, an adsorption module, a prefractionation module, and the like can be included in the feedstock purification system 104 to facilitate generation of the system outputs 106 by the feedstock purification system 104.

In some examples, a subset of the one or more modules of the feedstock purification system 104 may generate different portions of the system outputs 106. For example, the fractionation module may output the heavy ends 128, and the water wash module may output the purified steam cracker feedstock 125 and the purge water 134, though other or additional modules may output the foregoing or additional outputs that can be included in the system outputs 106. The purified steam cracker feedstock 125 may include purified hydrocarbon material that can be input into the steam cracker 108 to generate unsaturated hydrocarbon material or other suitable outputs from the steam cracker 108. The heavy ends 128 may be or include purified heavy oils that can be used as an input to the steam cracker 108, that can be included with the output hydrocarbons 110, or a combination thereof. The recycled water 130 may be generated by the water wash module in response to washing the hydrocarbon material 112 that may have previously been steam stripped or otherwise steam-diluted and purified. Pure or semi-pure water may be injected into the water wash module, which may circulate the water to contact the hydrocarbon material 112 and to extract the contaminants 114. The recycled water 130 may be or include the circulated water that includes at least a portion of the contaminants 114. The recycled water 130 can be recycled within the feedstock purification system 104 to reduce a usage of water by the feedstock purification system 104. For example, the recycled water 130 can be converted to steam to be used in the feedstock purification system 104 or for other suitable purposes.

The steam cracker 108 may be or include a steam cracking furnace that can receive saturated hydrocarbon material, or any other suitable inputs, and that can output unsaturated hydrocarbon material or any other suitable outputs. For example, the steam cracker 108 can receive the purified steam cracker feedstock 125, the heavy ends 128, or a combination thereof, and the steam cracker 108 can generate output hydrocarbons 110. The output hydrocarbons 110 can include olefins, unsaturated hydrocarbon material, and other suitable outputs that can be used as, or processed into, fuels, solvents, and other suitable products.

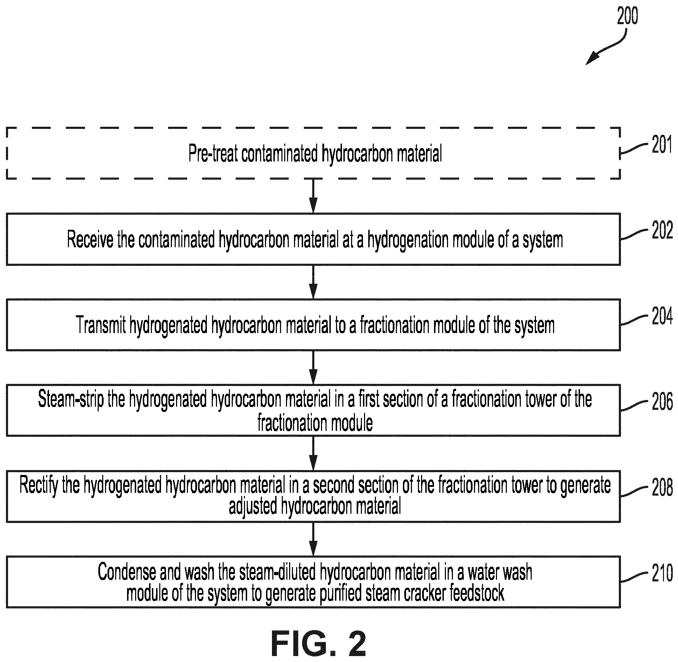

FIG. 2 is a flowchart of a process 200 for generating purified steam cracker feedstock 125 based on fractionating hydrogenated hydrocarbon material in a steam environment according to some examples of the present disclosure. At block 201, contaminated hydrocarbon material can be pre-treated. One or more guard beds of a feedstock purification system, such as the feedstock purification system 104, can be used to pre-treat the contaminated hydrocarbon material. For example, the guard beds can be used to remove catalyst poisons and for other suitable purposes for pre-treating the contaminated hydrocarbon material. In some examples, the guard beds, or processing for the pre-treatment, can be separate from the system, the process 200, or a combination thereof.

At block 202, the contaminated hydrocarbon material is received at a hydrogenation module. The hydrogenation module may be included in the feedstock purification system. The contaminated hydrocarbon material may be or include plastic-based waste, such as the plastic-based waste 102, which may include hydrocarbon material 112, contaminants 114, and the like. In some examples, the contaminated hydrocarbon material may be preprocessed such as by a filtration module to remove one or more solid contaminants or other easily-removed contaminants from the contaminated hydrocarbon material. In other examples, the contaminated hydrocarbon material may be or include hydrocarbon-rich waste such as trash, consumer products, industrial waste, and the like.

The hydrogenation module can receive the contaminated hydrocarbon material and can generate hydrogenated hydrocarbon material, for example by exposing the contaminated hydrocarbon material to varying temperatures or pressures in a hydrogen environment. In some examples, the hydrogenation module can remove a subset of contaminants that are included in the contaminated hydrocarbon material. For example, the hydrogenation module can expose the contaminated hydrocarbon material to a slightly elevated temperature or slightly elevated pressure to remove easy-to-remove contaminants. Additionally or alternatively, the hydrogenation module can expose the contaminated hydrocarbon material to higher temperatures or higher pressures to remove difficult-to-remove contaminants such as nitrogenates, oxygenates, and the like. In some examples, some of the hydrogenated hydrocarbon material may be recycled within the hydrogenation module to enhance an efficiency of, and to reduce an overall usage of hydrogen by, the hydrogenation module. Some hydrogen gas that may be saturated with contaminants or light hydrocarbons, such as methane, can accumulate to a level determined to be too high to effectively hydrogenate the hydrocarbon material may be purged.

At block 204, the hydrogenated hydrocarbon material is transmitted to a fractionation module. The fractionation module may be included in the feedstock purification system. Additionally or alternatively, the fractionation module may include a fractionation tower, a steam generator, other suitable components, or any combination thereof. The fractionation module can receive output material from the hydrogenation module. For example, the fractionation module can receive hydrogenated hydrocarbon material from the hydrogenation module and can steam-dilute the hydrogenated hydrocarbon material to allow further refining or purifying of the hydrocarbon material in a water wash or condensing module

In some examples, the steam generator can generate steam, for example from pure or semi-pure water, from recycled water, or other suitable sources of water, and can transmit the steam to the fractionation tower, which may be or include a stripping column. The hydrogenated hydrocarbon material can be transmitted to at least a portion of the fractionation tower. For example, a fluid transport line may convey the hydrogenated hydrocarbon material from the hydrogenation module to a first section of the fractionation tower. One or more temperature-adjusting elements, such as heaters, coolers, or the like, may be positioned along the fluid transport line to heat or cool the hydrogenated hydrocarbon material as the hydrogenated hydrocarbon material is transported to the fractionation tower. The fluid transport line may convey the heated (or cooled), hydrogenated hydrocarbon material to the first section of the fractionation tower. The first section of the fractionation tower may be or include a bottom portion of the fractionation tower. The fractionation tower may include a second section that may be vertically offset from the first section. For example, the second section may be positioned above the first section when the fractionation tower is installed in the feedstock purification system 104 or is otherwise in operation.

At block 206, the hydrogenated hydrocarbon material is steam-stripped in the fractionation module. For example, the hydrogenated hydrocarbon material can be steam-stripped in at least one section of the fractionation tower. The hydrogenated hydrocarbon material can be conveyed, for example from the hydrogenation module, to the first section of the fractionation tower to be steam-stripped. In some examples, the hydrogenated hydrocarbon material can be fed into the fractionation tower above a feed-in point of steam that can be used to provide a steam environment for the fractionation tower. The fractionation tower may have a steam environment, for example instead of a vacuum environment, an atmospheric environment, and the like, to steam-dilute or otherwise reduce the partial pressure of hydrocarbons lower than that of the hydrogenated material. The steam from the steam environment may recover more light hydrocarbons from heavy oils and other fuel oil hydrocarbon material by stripping. In some examples, and in response to the hydrogenated hydrocarbon material contacting the steam, or in response to the hydrogenated hydrocarbon material being fed into the fractionation tower, the heavy oils can be produced, for example from a bottom portion, via the fractionation tower. The light ends can be condensed from the top portion and used as a reflux, can be produced to be input into a steam cracker, or can otherwise suitably be used. Additionally or alternatively, the heavy oils, such as fuel oil, heavy residues, and the like, may have a first density or boiling point that is larger or higher than a second density or boiling point of the steam-diluted hydrocarbon material that can be generated via rectification in the second section of the fractionation tower.

At block 208, the hydrogenated hydrocarbon material is rectified in the second section of the fractionation tower. The hydrogenated hydrocarbon material may have heavy oils or residues entrained or condensed prior to the hydrogenated hydrocarbon material being rectified. The stripped hydrogenated hydrocarbon material may travel upward within the fractionation tower and into the second section of the fractionation tower. The rectification operation may produce steam diluted hydrocarbon material. In some examples, the steam-diluted hydrocarbon material may be or include hydro-treated pyrolysis oil, saturated hydrocarbon material having saturated or partially saturated contaminants, or the like. The steam-diluted hydrocarbon material may be transmitted to a subsequent module, such as the water wash module, of the feedstock purification system 104, where the steam can be condensed and can extract contaminants. In some examples, a caustic injection can be used to neutralize the condensed steam or to otherwise correct a pH of the condensed steam prior to or substantially contemporaneously with respect to transmitting the condensed steam and hydrocarbon material to the subsequent module of the feedstock purification system 104.

The steam environment of the fractionation tower may reduce a partial pressure of hydrocarbon material in the fractionation tower. Additionally or alternatively, reducing the partial pressure of the hydrocarbon material in the fractionation tower may allow stripping operations, rectification operations, or a combination thereof to be performed at a lower temperature, a higher total pressure, or a combination thereof compared to the foregoing operations being performed in a vacuum environment, in an atmospheric environment, in a positive pressure environment, and the like.

At block 210, the steam-diluted hydrocarbon material is condensed and washed with water to generate the purified steam cracker feedstock 125. In some examples, the steam-diluted hydrocarbon material can be received by the water wash module of the feedstock purification system 104. The water wash module can include a condensing device and can circulate water, such as pure water, semi-pure water, recycled water, and the like, to enhance contact between the water, the condensed steam, and hydrocarbon material to optimize removal of contaminants from the purified hydrocarbon material. In response to circulating the water for a predetermined number of cycles, for a predetermined amount of time, or the like, the water wash module can output the purified steam cracker feedstock 125, can recycle water, can purge water from circulation, and can generate or dispose any other suitable outputs.

In some examples, the water wash module can include a water wash container, one or more circulation loops, and any other suitable component for the water wash module. The one or more circulation loops can include one circulation loop, two circulation loops, three circulation loops, four circulation loops, five circulation loops, or more than five circulation loops. Each circulation loop of the one or more circulation loops can be or include a fluid transfer line that can be coupled with at least one compartment of the water wash container in at least two distinct locations. **In** a particular example, the water wash module can include two circulation loops. A first circulation loop can have a first end coupled with a bottom portion of a first compartment of the water wash container and can have a second end coupled with a top portion of the first compartment. Additionally or alternatively, a second circulation loop can have a first end coupled with a bottom portion of a second compartment of the water wash container and can have a second end coupled with a top portion of the second compartment.

Condensed steam and hydrocarbon material can be contacted by water in the water wash module and can enter a first section of a first compartment of the water mash module. The first section can separate water and oil within the steam-diluted hydrocarbon material. Oil can flow over a first weir from the first section of the first compartment to a second section of the first compartment. The oil can then pumped to a first section of a second compartment of the water wash module. Prior to entering the first section of the second compartment, the oil can be contacted with wash water included in the second circulation loop. The mixture of oil and water can enter the first section of the second compartment where the mixture can separate and cause the oil to flow over a second weir into a second section of the second compartment. The purified steam cracker feedstock can leave the second section of the second compartment. In some examples, the second circulation loop can circulate and receive fresh, top up water. The purge water from the second circulation loop can be transported to the first circulation loop. The purge water from the first circulation loop can be or include the recycled water or the purge water.

In some examples, the operations described with respect to the process 200 may cause hydrocarbon material to be purified, to be saturated, or the like. For example, the hydrogenated hydrocarbon material may have a first concentration of contaminants that is smaller than a second concentration of contaminants that may be included in the contaminated hydrocarbon material. Additionally or alternatively, the purified steam cracker feedstock may have a third concentration of contaminants that is smaller than the first concentration of contaminants in the hydrogenated hydrocarbon material.

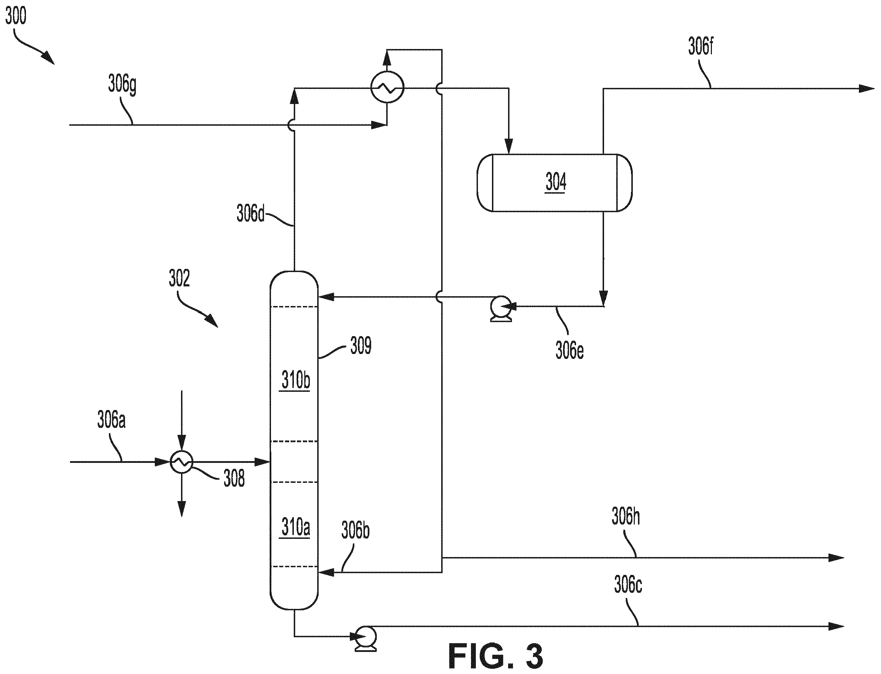

FIG. 3 is a diagram of a fractionation module 300 that can be used to fractionate hydrogenated hydrocarbon material in a steam environment to facilitate generating purified steam cracker feedstock 125 according to some examples of the present disclosure. As illustrated in FIG. 3, the fractionation module 300 can include a fractionation tower 302, a processing chamber 304, a partial condenser 305, one or more flowlines, such as flowlines 306a-g, a vaporizer 308, and any other suitable component for the fractionation module 300. The fractionation tower 302 may be or include a column that can be used to strip input material, to rectify input material, and the like. In some examples, the input may be vaporized or otherwise heated by the vaporizer 308 prior to the input being received by the fractionation tower 302. The processing chamber 304 can receive an output from the fractionation tower 302 and can recycle at least a portion of the output back to the fractionation tower 302, can transmit at least a portion of the output to a subsequent module, such as the water wash module, of the feedstock purification system 104, or a combination thereof. The one or more flowlines can be used to convey material to the fractionation module 300 (e.g., from a separate module, such as the hydrogenation module, of the feedstock purification system 104), to convey material within the fractionation module 300 (e.g., between the fractionation tower 302 and the processing chamber 304), to convey material from the fractionation module 300 (e.g., to a separate module, such as the water wash module, of the feedstock purification system 104), or any combination thereof.

The fractionation tower 302 may include a housing 309 that can define an interior region having one or more sections or compartments. For example, the housing 309 of the fractionation tower 302 may define a first section 310a and a second section 310b, though any other suitable number (e.g., less than two or more than two) of sections are possible for the fractionation tower 302. When the fractionation tower 302 is installed, is in operation, or the like, the first section 310a may be vertically offset, such as vertically above, from the second section 310b, and the first section 310a may be positioned below, such as in-line with gravity, the second section 310b. The fractionation tower 302 may be coupled with a set of flowlines. For example, the fractionation tower 302 may be coupled with flowlines 306a-e and seventh flowline 306g, though other suitable flowlines can be coupled with the fractionation tower 302. A first flowline 306a may be coupled with a middle portion of the fractionation tower 302 for providing input material, such as hydrogenated hydrocarbon material, to the fractionation tower 302. The vaporizer 308 may be coupled with or otherwise positioned along the first flowline 306a to vaporize the input material. A second flowline 306b may be coupled with a first bottom portion of the fractionation tower 302 for providing steam to the fractionation tower 302. The steam may originate from a seventh flowline 306g, which may provide recycled steam, or an eighth flowline 306h, which may provide imported steam. A third flowline 306c may be coupled with a second bottom portion of the fractionation tower 302 for transporting heavy residues, heavy oils, fuel oils, and the like from the fractionation tower 302. A fourth flowline 306d may be coupled with a first top portion of the fractionation tower 302 to transport steam-diluted hydrocarbon material from the fractionation tower 302. A fifth flowline 306e may be coupled with a second top portion of the fractionation tower 302 for receiving recycled material from the processing chamber 304.

The processing chamber 304, which may be or include a reflux chamber, may be fluidically coupled with the fractionation tower 302. For example, the fourth flowline 306d may be coupled with the fractionation tower 302 and with the processing chamber 304 to convey fluid from the fractionation tower 302 to the processing chamber 304. Additionally or alternatively, the fifth flowline 306e may be coupled with the fractionation tower 302 and with the processing chamber 304 to convey fluid from the processing chamber 304 to the fractionation tower 302. A sixth flowline 306f may be coupled with at least a portion, such as a top portion, of the processing chamber 304, for example via the partial condenser 305, to produce steam-diluted hydrocarbon material or to otherwise convey the steam-diluted hydrocarbon material to a subsequent module, such as the water wash module, of the feedstock purification system 104. While eight flowlines are illustrated and described with respect to the fractionation module 300, any other suitable number (e.g., more than eight or less than eight) of flowlines are possible to be included in the fractionation module 300. For example, additional flowlines can be included to enhance a recycling capability of the fractionation module 300, some flowlines may be omitted or combined to streamline operations performed by the fractionation module 300, and the like.

In some examples, the fractionation module 300 can be used to generate steam-diluted hydrocarbon material, heavy residues, and any other suitable outputs. The second flowline 306b can provide steam, for example from pure or semi-pure water, from recycled water (e.g., from the water wash module or from other suitable sources), and the like to the first section 310a of the fractionation tower 302 to provide a steam environment in the fractionation tower 302. Hydrogenated hydrocarbon material can be conveyed from the hydrogenation module to the first section 310a of the fractionation tower 302 via the first flowline 306a. Heavy residues, fuel oils, and the like can be conveyed from the fractionation tower 302 via the third flowline 306c. The remaining portions of the hydrogenated hydrocarbon material may rise into the second section 310b of the fractionation tower 302. The remaining portions can be rectified to generate steam-diluted hydrocarbon material. The steam-diluted hydrocarbon material can be produced or otherwise conveyed from the fractionation tower 302 via the fourth flowline 306d to the processing chamber 304, for example via the partial condenser 305. Some portions of the steam-diluted hydrocarbon material, such as material that includes a level of contaminants exceeding a threshold, material that condenses or otherwise migrates to a bottom portion of the processing chamber 304, and the like, may be recycled to the second section 310b of the fractionation tower 302 via the fifth flowline 306e. Remaining portions of the steam-diluted hydrocarbon material may be produced or otherwise conveyed from the processing chamber 304 and from the fractionation module 300 to a subsequent module, such as the water wash module or other suitable module, of the feedstock purification system 104.

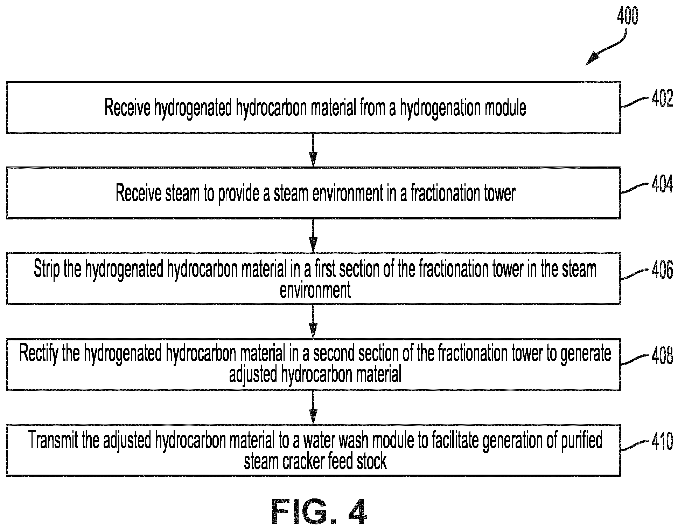

FIG. 4 is a flowchart of a process 400 for fractionating hydrogenated hydrocarbon material in a steam environment according to some examples of the present disclosure. At block 402, a fractionation module, such as the fractionation module 300, can receive hydrogenated hydrocarbon material. For example, contaminated hydrocarbon material may be input into a hydrogenation module, which can generate the hydrogenated hydrocarbon material and can transmit the hydrogenated hydrocarbon material to the fractionation module. The hydrogenated hydrocarbon material may include fewer, or a lower concentration of, contaminants compared with a number or concentration of contaminants included in the contaminated hydrocarbon material. The hydrogenated hydrocarbon material may be conveyed to the fractionation module via a first flowline of a set of flowlines included in, or otherwise coupled with, the fractionation module.

At block 404, the fractionation module may receive steam. The steam can be provide via the second flowline 306b and may be pure or semi-pure water, may be recycled water, or the like. The steam can be positioned in a fractionation tower, such as the fractionation tower 302 of the fractionation module 300, to provide a steam environment in the fractionation tower.

In some examples, the steam may be provided by one or more other suitable sources of steam. The one or more other suitable sources may include heating elements that may be positioned along one or more flowlines included in the fractionation module. For example, as water, whether pure, semi-pure, fresh, recycled, or the like, travels along a particular flowline, a heating element may heat the water and convert the water to steam prior to the water entering the fractionation tower. Additionally or alternatively, the fractionation module may use a combination of one or more heating elements and the steam generator to generate steam and provide the steam to the fractionation tower.

At block 406, the hydrogenated hydrocarbon material is stripped in a first section of the fractionation tower. The fractionation tower may have a set of sections that can include one section, two sections, three sections, or more than three sections. In a particular example, the fractionation tower can include a housing that defines two sections: the first section and a second section. The first section may be located vertically offset and below the second section, for example while the fractionation tower is in operation or otherwise when the fractionation tower is installed in the feedstock purification system 104. The hydrogenated hydrocarbon material may be conveyed along a first flowline and heated prior to entering the first section of the fractionation tower. The heated, hydrogenated hydrocarbon material may interact with the steam environment, and heavy residues, fuel oils, and other heavy materials may condense out of the heated, hydrogenated hydrocarbon material. In some examples, light ends may vaporize out of the heavy residues, fuel oils, and other heavy materials. The steam can further reduce partial pressure of the light ends, which can cause additional vaporization. The remaining liquid may include the heavy residues, fuel oils, and other heavy materials that flow down the lower section. The heavy residues, fuel oils, and other heavy materials may travel downward, such as in-line with gravity, and may be produced, or otherwise conveyed, from the fractionation tower. The remaining portions of the hydrogenated hydrocarbon material may travel upward, such as opposite with respect to gravity, into the second section of the fractionation tower.

At block 408, the remaining portions of the hydrogenated hydrocarbon material are rectified in the second section of the fractionation tower. In some examples, rectification may be or include a process in which the steam from the steam environment of the fractionation tower interacts with the remaining portions of the hydrogenated hydrocarbon material and contaminants from the hydrogenated hydrocarbon material.

At block 410, the steam-diluted hydrocarbon material is transmitted to a water wash module to facilitate generating purified steam cracker feedstock. The steam-diluted hydrocarbon material may be produced or otherwise conveyed from the fractionation tower. The steam-diluted hydrocarbon material can be transmitted to a processing chamber, such as the processing chamber 304, where the steam-diluted hydrocarbon material can be produced or recycled. A portion, such as a portion having non-separated contaminants exceeding a threshold level of non-separated contaminants, of the steam-diluted hydrocarbon material may be recycled into the fractionation tower to continue to be exposed to the steam environment. Other portions of the steam-diluted hydrocarbon material may be produced or otherwise conveyed from the processing chamber, and the fractionation module, to the water wash module or other suitable module that can generate purified steam cracker feedstock using the steam-diluted hydrocarbon material.

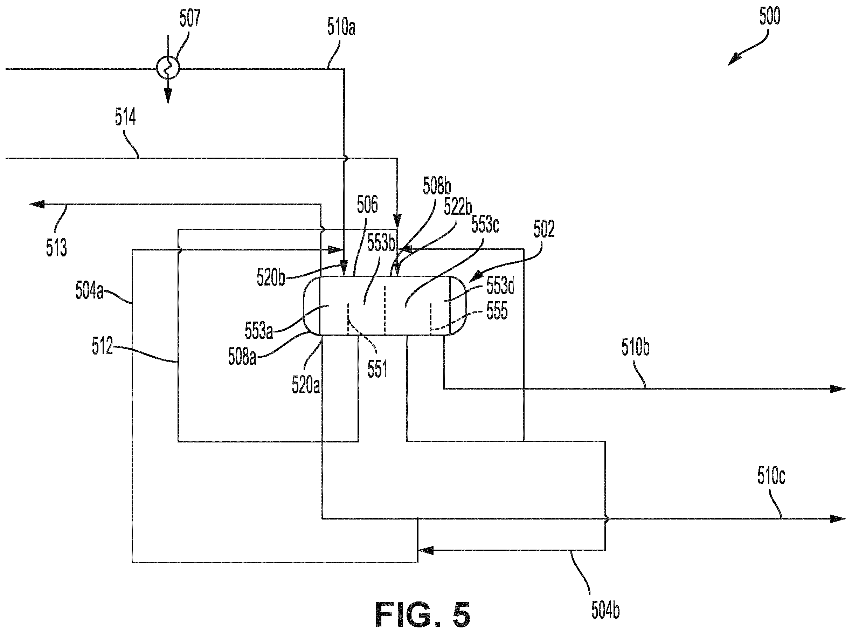

FIG. 5 is a diagram of a water wash module 500 that can be used to generate purified steam cracker feedstock 125 according to some examples of the present disclosure. As illustrated in FIG. 5, the water wash module 500 can include a water wash container 502, and one or more circulation loops. Two circulation loops, such as a first circulation loop 504a and a second circulation loop 504b, are illustrated in the water wash module 500, though other suitable numbers, such as one or more than two, of circulation loops are possible to include in the water wash module 500. In some examples, each additional circulation loop may have fewer contaminants, or a lesser concentration thereof, than a previous circulation loop. The first circulation loop 504a may have a first end 520a coupled with a bottom portion of a first compartment 508a of the water wash container 502, and the first circulation loop 504a may have a second end 520b coupled with a top portion of the first compartment 508a. The second circulation loop 504b may have a first end 522a coupled with a bottom portion of a second compartment 508b of the water wash container 502, and the second circulation loop 504b may have a second end 522b coupled with a top portion of the second compartment 508b.

The water wash container 502 may include one or more compartments. As illustrated, the water wash container 502 includes a housing 506 that defines the first compartment 508a and the second compartment 508b, though other suitable numbers, such as one or more than two, of compartments are possible to include in the water wash container 502. Additionally or alternatively, the water wash module 500 may include one or more flowlines, such as flowlines 510a-c, that can convey fluid or gas with respect to the water wash module 500.

A first flowline 510a can convey adjusted hydrocarbon material from a separate, previous module, such as the fractionation module 300, of the feedstock purification system 104 to the water wash module 500. In some examples, the first flowline 510a may include or may be coupled with a condensate device 507 that can cool the adjusted hydrocarbon material, for example to promote contaminant removal from the adjusted hydrocarbon material. The first flowline 510a can cause the adjusted hydrocarbon material to be transported to the first compartment 508a of the water wash container 502. The adjusted hydrocarbon material may be allowed to settle in the first compartment 508a for a predetermined amount of time. During the predetermined amount of time elapsing, water that has bonded or otherwise combined with contaminants included in the adjusted hydrocarbon material may physically separate from partially purified hydrocarbon material included in the adjusted hydrocarbon material. For example, the partially purified hydrocarbon material may migrate to a top portion of the first compartment 508a, while the water, which may be bonded to some contaminants, may migrate to a bottom portion of the first compartment 508a. In some examples, the partially purified hydrocarbon material may migrate to a top of a first weir 551 and move from a first section 553a of the first compartment 508a to a second section 553b of the first compartment 508a. Additionally or alternatively, a vent line 513 may be coupled with the first compartment 508a of the water wash container 502 to vent or otherwise transport light tails, such as light hydrocarbons, from the water wash module 500.

Subsequent to the predetermined amount of time elapsing, the first circulation loop 504a may receive the water and may circulate the water from a bottom portion of the first compartment 508a to a top portion of the first compartment 508a. The first circulation loop 504a may include one or more valves, pumps, and the like that facilitate controller fluid transfer with respect to the water wash container 502. The circulated water may again contact the partially purified hydrocarbon material to encourage a maximum amount of contaminants to bond to the water and to be removed from the partially purified hydrocarbon material.

Subsequent to another predetermined amount of time elapsing, or subsequent to a predetermined number circulation cycles of water via the first circulation loop 504a, the water wash module 500 may cause the partially purified hydrocarbon material to be transferred to the second compartment 508b of the water wash container 502. For example, a transfer line 512 can receive the partially purified hydrocarbon material from the second section 553b of the first compartment 508a, can be coupled with a feed water line 514 that can mix the partially purified hydrocarbon material with pure feed water and can convey the partially purified hydrocarbon material and the pure feed water to the second compartment 508b. In some examples, the pure feed water can be or include make-up water that includes trace-to-no contaminants removed from the partially purified hydrocarbon material. The partially purified hydrocarbon material may be allowed to settle in the second compartment 508b for a predetermined amount of time. During the predetermined amount of time elapsing, water that has bonded or otherwise combined with contaminants included in the partially purified hydrocarbon material may physically separate from purified hydrocarbon material included in the partially purified hydrocarbon material. For example, the purified hydrocarbon material may migrate to a top portion of the second compartment 508b, while the water, which may be bonded to some contaminants, may migrate to a bottom portion of the second compartment 508b. In some examples, the purified hydrocarbon material may migrate to a top of a second weir 555 and move from a first section 553c of the second compartment 508b to a second section 553d of the second compartment 508b.

Subsequent to the predetermined amount of time elapsing, the second circulation loop 504b may receive the water and may circulate the water from a bottom portion of the second compartment 508b to a top portion of the second compartment 508b. The second circulation loop 504b may include one or more valves, pumps, and the like that facilitate controller fluid transfer with respect to the water wash container 502. The circulated water may again contact the purified hydrocarbon material to encourage a maximum amount of contaminants to bond to the water and to be removed from the purified hydrocarbon material.

Subsequent to another predetermined amount of time elapsing, or subsequent to a predetermined number circulation cycles of water via the second circulation loop 504b, the water wash module 500 may cause the purified hydrocarbon material, which may be or include the purified steam cracker feedstock 125, to be produced or otherwise conveyed from the water wash container 502. For example, a second flowline 510b may open and may receive the purified hydrocarbon material. The second flowline 510b may produce or otherwise convey the purified hydrocarbon material from the water wash module 500 to a post-processing module, to a steam cracker furnace, or to any other suitable destination for the purified hydrocarbon material. Additionally or alternatively, a third flowline 510c may open subsequent to, or substantially contemporaneously with respect to, the purified hydrocarbon material being produced to convey purge water from the water wash container 502. The purge water may include water that has bonded or otherwise combined with contaminants from the adjusted hydrocarbon material. In some examples, and in response to determining that the purge water includes a level of contaminants that exceeds a threshold level, the purge water may be dumped or otherwise removed from the feedstock purification system 104, for example to prevent introducing additional contaminants to new batches or streams of hydrocarbon material that flows through the feedstock purification system 104. Additionally or alternatively, in response to determining that the purge water includes a level of contaminants that does not exceed a threshold level, the purge water may be recycled within the feedstock purification system 104. For example, the purge water can be recycled into the water wash container 502 to continue contacting subsequent batches or flows of adjusted hydrocarbon material. Additionally or alternatively, the purge water can be recycled to the fractionation module to be converted to steam that can be used to provide a steam environment for the fractionation tower.

In some examples, each loop of the circulation loops included in the water wash module can have at least one section. Additionally, each section can have two compartments. In some examples, such as when more than one circulation loop is included in the circulation loops, water can circulate within one or more loops of the circulation loops and can have a water purge from one loop to another.

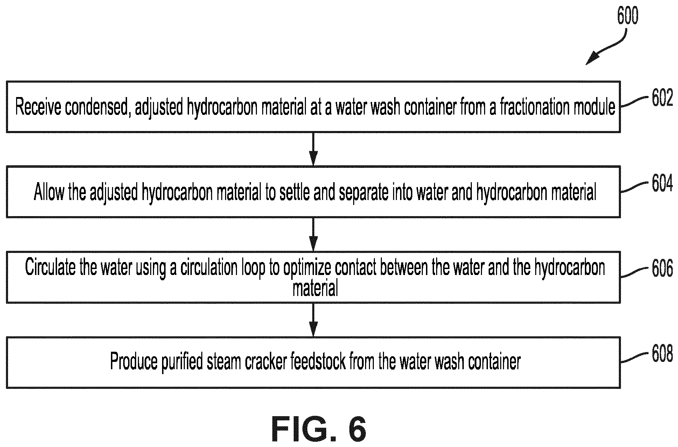

FIG. 6 is a flowchart of a process 600 for generating purified steam cracker feedstock 125 using a water wash module, such as the water wash module 500, according to some examples of the present disclosure. At block 602, condensed, steam-diluted hydrocarbon material is received at a water wash module such as the water wash module 500. The condensed, steam-diluted hydrocarbon material may originate from a fractionation module, such as the fractionation module 300, and may include contaminants, water, a mixture of water and contaminants from a steam environment of the fractionation module 300 that have been condensed or otherwise cooled by a condensate device, etc. The contaminants may be heterogeneously mixed with hydrocarbon material and may be bonded or otherwise combined with water molecules from the steam environment of the fractionation module. The condensed, steam-diluted hydrocarbon material may be received at, and may be positioned in, a first compartment, such as the first compartment 508a, of a water wash container, such as the water wash container 502, of the water wash module.

At block 604, the condensed, steam-diluted hydrocarbon material is allowed to settle in the first compartment of the water wash container. The condensed, steam-diluted hydrocarbon material may be allowed to settle for a predetermined amount of time, for a predetermined number of water circulation cycles, or the like. While the condensed, steam-diluted hydrocarbon material is settling, portions of the condensed, steam-diluted hydrocarbon material may separate from one another. For example, the condensed, steam-diluted hydrocarbon material may include partially purified hydrocarbon material, contaminant-bonded water, water soluble contaminants and other suitable components. The partially purified hydrocarbon material may migrate to a top portion of the first compartment, while the contaminant-bonded water and the water soluble contaminants may migrate to a bottom portion of the first compartment, or any section included in the first compartment.

At block 606, the contaminant-bonded water and water soluble contaminants may be circulated with respect to the first compartment. For example, and subsequent to a predetermined amount of time elapsing, the contaminant-bonded water and water soluble contaminants, which may have separated from the partially purified hydrocarbon material in the first compartment, can be conveyed into a first circulation loop via a first end of the first circulation loop that is coupled with a bottom portion of the first compartment. The contaminant-bonded water and water soluble contaminants can be conveyed through the first circulation loop to a second end of the first circulation loop that is coupled with a top portion of the first compartment. This way, the contaminant-bonded water and water soluble contaminants can continuously contact the partially purified hydrocarbon material to optimize removal of contaminants from the partially purified hydrocarbon material and to optimize purification of the hydrocarbon material. Additionally or alternatively, pure water, semi-pure water, fresh water, or the like can be added, for example via the first circulation loop or other suitable flowlines included in the water wash module, to the first compartment continuously, periodically, or the like.

The contaminant-bonded water and water soluble contaminants may be circulated one or more times. For example, the contaminant-bonded water and water soluble contaminants may be circulated one time, two times, three times, four times, or more than four times. Additionally or alternatively, the contaminant-bonded water may be circulated for a predetermined amount of time. Subsequent to the predetermined number of times of circulation, to the predetermined amount of time, or the like, the partially purified hydrocarbon material and optionally the contaminant-bonded water and water soluble contaminants may be produced or otherwise conveyed away from the first compartment. In some examples, the partially purified hydrocarbon material may be mixed with pure feed water and conveyed to a second compartment of the water wash container to undergo a second round of water circulation cycles with water that may have fewer, or less concentration of, contaminants than water in the first compartment. The partially purified hydrocarbon material may undergo one cycle, two cycles, three cycles, four cycles, or more than four cycles of water circulation, for example based on a corresponding number of compartments included in the water wash container. In other examples, and subsequent to the initial circulation cycle, the partially purified hydrocarbon material may be transformed into purified hydrocarbon material, which can be produced, while contaminant-bonded water and water soluble contaminants may be purged or recycled with respect to the water wash module, the fractionation module, other suitable modules or systems, or a combination thereof.

At block 608, purified steam cracker feedstock, such as the purified steam cracker feedstock 125, is produced from the water wash module. The purified hydrocarbon material, which can be produced from the water wash container subsequent to one or more water circulation cycles, may be or include the purified steam cracker feedstock. For example, the purified steam cracker feedstock may include purified hydrocarbon material such as saturated hydrocarbon material and the like. The water wash module may cause the purified steam cracker feedstock to be conveyed, for example via a flowline that is coupled with the water wash container and that extends away from the water wash container, from the water wash container to a subsequent module, such as a post-processing module, of the feedstock purification system 104, or to a steam cracker furnace.

## Claims

1. A system comprising:
a fractionation module fluidically coupled with a water wash module, the fractionation module positioned to receive hydrogenated hydrocarbon material and to output steam-diluted hydrocarbon material, the hydrogenated hydrocarbon material generated from plastic waste, the fractionation module comprising:
a fractionation tower comprising:
a first section positioned to facilitate stripping the hydrogenated hydrocarbon material in a steam environment; and
a second section offset from the first section and positioned to facilitate rectifying the hydrogenated hydrocarbon material in the steam environment; and
the water wash module fluidically coupled with the fractionation module, the water wash module positioned to receive the steam-diluted hydrocarbon material and to output purified steam cracker feedstock, the water wash module comprising a circulation loop extending from a first end of a compartment of the water wash module to a second end of the compartment of the water wash module.

2. The system of claim 1, further comprising a hydrogenation module fluidically coupled with the fractionation module, wherein the hydrogenation module positioned to receive contaminated hydrocarbon material and to output the hydrogenated hydrocarbon material.

3. The system of claim 1, wherein the hydrogenated hydrocarbon material has a first concentration of contaminants that is larger than a second concentration of contaminants in the steam-diluted hydrocarbon material, and wherein the purified steam cracker feedstock has a third concentration of contaminants that is smaller than the second concentration of contaminants in the steam-diluted hydrocarbon material.

4. The system of claim 1, wherein the circulation loop is a first circulation loop, wherein the water wash module further comprises a second circulation loop that extends from a first end of a second compartment of the water wash module to a second end of the second compartment of the water wash module, wherein the water wash module comprises a water wash container having a number of compartments that corresponds to a number of circulation loops included in the water wash module, and wherein the compartment and the second compartment are included in the number of compartments.

5. The system of claim 4, wherein first fluid from the compartment is circulatable via the first circulation loop to cause continuous interaction between water and the steam-diluted hydrocarbon material to generate partially purified, steam-diluted hydrocarbon material, wherein second fluid from the second compartment of the water wash container is circulated via the second circulation loop to cause continuous interaction between water and the partially purified, steam-diluted hydrocarbon material to generate the purified steam cracker feedstock and purge water, wherein the purge water comprises water and contaminants from the steam-diluted hydrocarbon material, and wherein the purge water is transmitted to the fractionation module to be converted to steam for use in the fractionation tower.

6. The system of claim 1, wherein the fractionation tower is positioned such that the first section is vertically offset from the second section, wherein rectifying the hydrogenated hydrocarbon material is performed in the second section such that contaminants in the hydrogenated hydrocarbon material are combined with condensed water from the steam environment of the fractionation tower.

7. The system of claim 1, wherein heavy hydrocarbon tails are extracted from the first section, and wherein the heavy hydrocarbon tails have a first boiling point that is higher than a second boiling point of the steam-diluted hydrocarbon material.

8. A method comprising:
receiving, at a hydrogenation module of a system, contaminated hydrocarbon material generated from plastic waste;
transmitting, by the hydrogenation module, hydrogenated hydrocarbon material to a fractionation module of the system;
stripping, in a first section of a fractionation tower of the fractionation module, the hydrogenated hydrocarbon material in a steam environment to vaporize a portion of the hydrogenated hydrocarbon material;
rectifying, in a second section of the fractionation tower that is vertically offset from the first section, the hydrogenated hydrocarbon material in the steam environment to generate steam-diluted hydrocarbon material; and
washing the steam-diluted hydrocarbon material to generate purified steam cracker feedstock, the washing performed with a water wash module that includes a water wash container and a circulation loop that extends from a first end of a compartment of the water wash container to a second end of the compartment of the water wash container.

9. A method according to claim 8, wherein the circulation loop is a first circulation loop, wherein the water wash module further comprises a second circulation loop that extends from a first end of a second compartment of the water wash container to a second end of the second compartment of the water wash container to circulate fluid with respect to the water wash container, wherein the water wash container comprises a number of compartments that corresponds to a number of circulation loops included in the water wash module, and wherein the compartment and the second compartment are included in the number of compartments.

10. The method of claim 8, wherein the hydrogenated hydrocarbon material has a first concentration of contaminants that is smaller than a second concentration of contaminants in the contaminated hydrocarbon material, and wherein the purified steam cracker feedstock has a third concentration of contaminants that is smaller than the first concentration of contaminants in the hydrogenated hydrocarbon material.

11. The method of claim 8, wherein first fluid from the compartment of the water wash container is circulated via the first circulation loop to cause continuous interaction between water and the steam-diluted hydrocarbon material to generate partially purified, adjusted hydrocarbon material, wherein second fluid from the second compartment of the water wash container is circulated via the second circulation loop to cause continuous interaction between water and the partially purified, steam-diluted hydrocarbon material to generate the purified steam cracker feedstock and purge water, wherein the purge water comprises water and contaminants from the steam-diluted hydrocarbon material, and wherein a majority of purge water is transmitted to the fractionation module to be converted to steam for use in the fractionation tower, with a balance of the purge water leaving the system to prevent accumulation of contaminants.

12. The method of claim 11, wherein the first section is vertically offset from the second section while the fractionation tower is in use, wherein rectifying the hydrogenated hydrocarbon material is performed in the second section such that contaminants in the hydrogenated hydrocarbon material are combined with condensed water from the steam environment of the fractionation tower.

13. The method of claim 8, wherein heavy hydrocarbon tails are extracted from the first section, and wherein the heavy hydrocarbon tails have a first boiling point that is higher than a second boiling point of the steam-diluted hydrocarbon material.

## Patentansprüche

1. System, umfassend:
ein Fraktioniermodul, das fluidisch mit einem Wasserwaschmodul gekoppelt ist, wobei das Fraktioniermodul positioniert ist, um hydriertes Kohlenwasserstoffmaterial zu empfangen und dampfverdünntes Kohlenwasserstoffmaterial auszugeben, wobei das hydrierte Kohlenwasserstoffmaterial aus Kunststoffabfall erzeugt wird, wobei das Fraktioniermodul umfasst:
eine Fraktionierkolonne, umfassend:
eine erste Sektion, die positioniert ist, um das Strippen des hydrierten Kohlenwasserstoffmaterials in einer Dampfumgebung zu erleichtern; und
eine zweite Sektion, die gegenüber der ersten Sektion versetzt und so positioniert ist, dass sie das Rektifizieren des hydrierten Kohlenwasserstoffmaterials in der Dampfumgebung erleichtert; und
das Wasserwaschmodul, das fluidisch mit dem Fraktioniermodul gekoppelt ist, wobei das Wasserwaschmodul positioniert ist, um das dampfverdünnte Kohlenwasserstoffmaterial zu empfangen und gereinigtes Dampfcracker-Einsatzmaterial auszugeben, wobei das Wasserwaschmodul eine Zirkulationsschleife umfasst, die sich von einem ersten Ende eines Abteils des Wasserwaschmoduls zu einem zweiten Ende des Abteils des Wasserwaschmoduls erstreckt.

2. System nach Anspruch 1, ferner umfassend ein Hydriermodul, das fluidisch mit dem Fraktioniermodul gekoppelt ist, wobei das Hydriermodul positioniert ist, um verunreinigtes Kohlenwasserstoffmaterial zu empfangen und das hydrierte Kohlenwasserstoffmaterial auszugeben.

3. System nach Anspruch 1, wobei das hydrierte Kohlenwasserstoffmaterial eine erste Konzentration von Verunreinigungen aufweist, die größer ist als eine zweite Konzentration von Verunreinigungen in dem dampfverdünnten Kohlenwasserstoffmaterial, und wobei das gereinigte Dampfcracker-Einsatzmaterial eine dritte Konzentration von Verunreinigungen aufweist, die kleiner ist als die zweite Konzentration von Verunreinigungen in dem dampfverdünnten Kohlenwasserstoffmaterial.

4. System nach Anspruch 1, wobei die Zirkulationsschleife eine erste Zirkulationsschleife ist, wobei das Wasserwaschmodul ferner eine zweite Zirkulationsschleife umfasst, die sich von einem ersten Ende eines zweiten Abteils des Wasserwaschmoduls zu einem zweiten Ende des zweiten Abteils des Wasserwaschmoduls erstreckt, wobei das Wasserwaschmodul einen Wasserwaschbehälter umfasst, der eine Anzahl von Abteilen aufweist, die einer Anzahl von Zirkulationsschleifen entspricht, die in dem Wasserwaschmodul eingeschlossen sind, und wobei das Abteil und das zweite Abteil in der Anzahl von Abteilen eingeschlossen sind.

5. System nach Anspruch 4, wobei erstes Fluid aus dem Abteil über die erste Zirkulationsschleife zirkulierbar ist, um kontinuierliche Wechselwirkung zwischen Wasser und dem dampfverdünnten Kohlenwasserstoffmaterial zu bewirken, um teilweise gereinigtes, dampfverdünntes Kohlenwasserstoffmaterial zu erzeugen, wobei zweites Fluid aus dem zweiten Abteil des Wasserwaschbehälters über die zweite Zirkulationsschleife zirkuliert wird, um kontinuierliche Wechselwirkung zwischen Wasser und dem teilweise gereinigten, dampfverdünnten Kohlenwasserstoffmaterial zu bewirken, um das gereinigte Dampfcracker-Einsatzmaterial und Waschwasser zu erzeugen, wobei das Waschwasser Wasser und Verunreinigungen aus dem dampfverdünnten Kohlenwasserstoffmaterial umfasst und wobei das Waschwasser zu dem Fraktioniermodul übertragen wird, um in Dampf zur Verwendung in der Fraktionierkolonne umgewandelt zu werden.

6. System nach Anspruch 1, wobei die Fraktionierkolonne so positioniert ist, dass die erste Sektion gegenüber der zweiten Sektion vertikal versetzt ist, wobei das Rektifizieren des hydrierten Kohlenwasserstoffmaterials in der zweiten Sektion durchgeführt wird, sodass Verunreinigungen in dem hydrierten Kohlenwasserstoffmaterial mit kondensiertem Wasser aus der Dampfumgebung der Fraktionierkolonne kombiniert werden.

7. System nach Anspruch 1, wobei schwere Kohlenwasserstoffrückstände aus der ersten Sektion extrahiert werden und wobei die schweren Kohlenwasserstoffrückstände einen ersten Siedepunkt aufweisen, der höher ist als ein zweiter Siedepunkt des dampfverdünnten Kohlenwasserstoffmaterials.

8. Verfahren, umfassend:
Empfangen, an einem Hydriermodul eines Systems, von verunreinigtem Kohlenwasserstoffmaterial, das aus Kunststoffabfall erzeugt wird;
Übertragen, durch das Hydriermodul, von hydriertem Kohlenwasserstoffmaterial zu einem Fraktioniermodul des Systems;
Strippen des hydrierten Kohlenwasserstoffmaterials in einer Dampfumgebung in einer ersten Sektion einer Fraktionierkolonne des Fraktioniermoduls, um einen Teil des hydrierten Kohlenwasserstoffmaterials zu verdampfen;
Rektifizieren des hydrierten Kohlenwasserstoffmaterials in der Dampfumgebung in einer zweiten Sektion der Fraktionierkolonne, die vertikal gegenüber der ersten Sektion versetzt ist, um dampfverdünntes Kohlenwasserstoffmaterial zu erzeugen; und
Waschen des dampfverdünnten Kohlenwasserstoffmaterials, um gereinigtes Dampfcracker-Einsatzmaterial zu erzeugen, wobei das Waschen mit einem Wasserwaschmodul durchgeführt wird, das einen Wasserwaschbehälter und eine Zirkulationsschleife einschließt, die sich von einem ersten Ende eines Abteils des Wasserwaschbehälters zu einem zweiten Ende des Abteils des Wasserwaschbehälters erstreckt.

9. Verfahren nach Anspruch 8, wobei die Zirkulationsschleife eine erste Zirkulationsschleife ist, wobei das Wasserwaschmodul ferner eine zweite Zirkulationsschleife umfasst, die sich von einem ersten Ende eines zweiten Abteils des Wasserwaschbehälters zu einem zweiten Ende des zweiten Abteils des Wasserwaschbehälters erstreckt, um Fluid in Bezug auf den Wasserwaschbehälter zu zirkulieren, wobei der Wasserwaschbehälter eine Anzahl von Abteilen umfasst, die einer Anzahl von Zirkulationsschleifen entspricht, die in dem Wasserwaschmodul eingeschlossen sind, und wobei das Abteil und das zweite Abteil in der Anzahl von Abteilen eingeschlossen sind.

10. Verfahren nach Anspruch 8, wobei das hydrierte Kohlenwasserstoffmaterial eine erste Konzentration von Verunreinigungen aufweist, die kleiner ist als eine zweite Konzentration von Verunreinigungen in dem verunreinigten Kohlenwasserstoffmaterial, und wobei das gereinigte Dampfcracker-Einsatzmaterial eine dritte Konzentration von Verunreinigungen aufweist, die kleiner ist als die erste Konzentration von Verunreinigungen in dem hydrierten Kohlenwasserstoffmaterial.

11. Verfahren nach Anspruch 8, wobei erstes Fluid aus dem Abteil des Wasserwaschbehälters über die erste Zirkulationsschleife zirkuliert wird, um kontinuierliche Wechselwirkung zwischen Wasser und dem dampfverdünnten Kohlenwasserstoffmaterial zu bewirken, um teilweise gereinigtes, angepasstes Kohlenwasserstoffmaterial zu erzeugen, wobei zweites Fluid aus dem zweiten Abteil des Wasserwaschbehälters über die zweite Zirkulationsschleife zirkuliert wird, um kontinuierliche Wechselwirkung zwischen Wasser und dem teilweise gereinigten, dampfverdünnten Kohlenwasserstoffmaterial zu bewirken, um das gereinigte Dampfcracker-Einsatzmaterial und Waschwasser zu erzeugen, wobei das Waschwasser Wasser und Verunreinigungen aus dem dampfverdünnten Kohlenwasserstoffmaterial umfasst und wobei ein Großteil des Waschwassers zu dem Fraktioniermodul übertragen wird, um in Dampf zur Verwendung in der Fraktionierkolonne umgewandelt zu werden, wobei ein Rest des Waschwassers das System verlässt, um eine Ansammlung von Verunreinigungen zu verhindern.

12. Verfahren nach Anspruch 11, wobei die erste Sektion vertikal gegenüber der zweiten Sektion versetzt ist, während die Fraktionierkolonne in Betrieb ist, wobei das Rektifizieren des hydrierten Kohlenwasserstoffmaterials in der zweiten Sektion durchgeführt wird, sodass Verunreinigungen in dem hydrierten Kohlenwasserstoffmaterial mit kondensiertem Wasser aus der Dampfumgebung der Fraktionierkolonne kombiniert werden.

13. Verfahren nach Anspruch 8, wobei schwere Kohlenwasserstoffrückstände aus der ersten Sektion extrahiert werden und wobei die schweren Kohlenwasserstoffrückstände einen ersten Siedepunkt aufweisen, der höher ist als ein zweiter Siedepunkt des dampfverdünnten Kohlenwasserstoffmaterials.

## Revendications

1. Système comprenant :
un module de fractionnement accouplé fluidiquement à un module de lavage à l'eau, le module de fractionnement étant positionné pour recevoir un matériau hydrocarboné hydrogéné et pour produire un matériau hydrocarboné dilué à la vapeur, le matériau hydrocarboné hydrogéné étant généré à partir de déchets plastiques, le module de fractionnement comprenant :
une tour de fractionnement comprenant :
une première section positionnée pour faciliter le décapage du matériau hydrocarboné hydrogéné dans un environnement de vapeur ; et
une seconde section décalée par rapport à la première section et positionnée pour faciliter la rectification du matériau hydrocarboné hydrogéné dans l'environnement de vapeur ; et
le module de lavage à l'eau accouplé fluidiquement au module de fractionnement, le module de lavage à l'eau étant positionné pour recevoir le matériau hydrocarboné dilué à la vapeur et pour délivrer en sortie une charge d'alimentation pour vapocraqueur purifiée, le module de lavage à l'eau comprenant une boucle de circulation s'étendant d'une première extrémité d'un compartiment du module de lavage à l'eau à une seconde extrémité du compartiment du module de lavage à l'eau.

2. Système selon la revendication 1, comprenant en outre un module d'hydrogénation accouplé fluidiquement au module de fractionnement, dans lequel le module d'hydrogénation est positionné de manière à recevoir un matériau hydrocarboné contaminé et à sortir le matériau hydrocarboné hydrogéné.

3. Système selon la revendication 1, dans lequel le matériau hydrocarboné hydrogéné a une première concentration de contaminants qui est supérieure à une deuxième concentration de contaminants dans le matériau hydrocarboné dilué à la vapeur, et dans lequel la charge d'alimentation pour vapocraqueur purifiée a une troisième concentration de contaminants qui est plus petite que la deuxième concentration de contaminants dans le matériau hydrocarboné dilué à la vapeur.

4. Système selon la revendication 1, dans lequel la boucle de circulation est une première boucle de circulation, dans lequel le module de lavage à l'eau comprend en outre une seconde boucle de circulation qui s'étend d'une première extrémité d'un second compartiment du module de lavage à l'eau à une seconde extrémité du second compartiment du module de lavage à l'eau, dans lequel le module de lavage à l'eau comprend un récipient de lavage à l'eau ayant un nombre de compartiments qui correspond à un nombre de boucles de circulation comprises dans le module de lavage à l'eau, et dans lequel le compartiment et le second compartiment sont compris dans le nombre de compartiments.

5. Système selon la revendication 4, dans lequel le premier fluide provenant du compartiment peut circuler par l'intermédiaire de la première boucle de circulation pour provoquer une interaction continue entre l'eau et le matériau hydrocarboné dilué à la vapeur pour générer un matériau hydrocarboné partiellement purifié et dilué à la vapeur, dans lequel le second fluide provenant du second compartiment du récipient de lavage à l'eau circule par l'intermédiaire de la seconde boucle de circulation pour provoquer une interaction continue entre l'eau et le matériau partiellement purifié, hydrocarboné dilué à la vapeur pour générer la charge d'alimentation pour vapocraqueur purifiée et l'eau de purge, dans lequel l'eau de purge comprend de l'eau et des contaminants provenant du matériau hydrocarboné dilué à la vapeur, et dans lequel l'eau de purge est transmise au module de fractionnement pour être convertie en vapeur pour une utilisation dans la tour de fractionnement.

6. Système selon la revendication 1, dans lequel la tour de fractionnement est positionnée de telle sorte que la première section est décalée verticalement par rapport à la seconde section, dans lequel la rectification du matériau hydrocarboné hydrogéné est effectuée dans la seconde section de telle sorte que les contaminants dans le matériau hydrocarboné hydrogéné sont combinés avec de l'eau condensée provenant de l'environnement de vapeur de la tour de fractionnement.

7. Système selon la revendication 1, dans lequel les résidus d'hydrocarbures lourds sont extraits de la première section, et dans lequel les résidus d'hydrocarbures lourds ont un premier point d'ébullition supérieur à un second point d'ébullition du matériau hydrocarboné dilué à la vapeur.

8. Procédé comprenant :
la réception, au niveau d'un module d'hydrogénation d'un système, d'un matériau hydrocarboné contaminé généré par des déchets plastiques ;
la transmission, par le module d'hydrogénation, d'un matériau hydrocarboné hydrogéné à un module de fractionnement du système ;
le décapage, dans une première section d'une tour de fractionnement du module de fractionnement, du matériau hydrocarboné hydrogéné dans un environnement de vapeur pour vaporiser une partie du matériau hydrocarboné hydrogéné ;
la rectification, dans une seconde section de la tour de fractionnement qui est décalée verticalement par rapport à la première section, du matériau hydrocarboné hydrogéné dans l'environnement de vapeur pour générer un matériau hydrocarboné dilué à la vapeur ; et
le lavage du matériau hydrocarboné dilué à la vapeur pour générer une charge d'alimentation pour vapocraqueur purifiée, le lavage étant effectué avec un module de lavage à l'eau qui comporte un récipient de lavage à l'eau et une boucle de circulation qui s'étend d'une première extrémité d'un compartiment du récipient de lavage à l'eau à une seconde extrémité du compartiment du récipient de lavage à l'eau.

9. Procédé selon la revendication 8, dans lequel la boucle de circulation est une première boucle de circulation, dans lequel le module de lavage à l'eau comprend en outre une seconde boucle de circulation qui s'étend d'une première extrémité d'un second compartiment du récipient de lavage à l'eau à une seconde extrémité du second compartiment du récipient de lavage à l'eau pour faire circuler le fluide par rapport au récipient de lavage à l'eau, dans lequel le récipient de lavage à l'eau comprend un nombre de compartiments qui correspond à un nombre de boucles de circulation comprises dans le module de lavage à l'eau, et dans lequel le compartiment et le second compartiment sont compris dans le nombre de compartiments.

10. Procédé selon la revendication 8, dans lequel le matériau hydrocarboné hydrogéné a une première concentration de contaminants qui est inférieure à une deuxième concentration de contaminants dans le matériau hydrocarboné contaminé, et dans lequel la charge d'alimentation pour vapocraqueur purifiée a une troisième concentration de contaminants qui est plus petite que la première concentration de contaminants dans le matériau hydrocarboné hydrogéné.

11. Procédé selon la revendication 8, dans lequel le premier fluide provenant du compartiment du récipient de lavage à l'eau est mis en circulation par l'intermédiaire de la première boucle de circulation pour provoquer une interaction continue entre l'eau et le matériau hydrocarboné dilué à la vapeur pour générer un matériau hydrocarboné ajusté partiellement purifié, dans lequel le second fluide provenant du second compartiment du récipient de lavage à l'eau circule par l'intermédiaire de la seconde boucle de circulation pour provoquer une interaction continue entre l'eau et le matériau partiellement purifié, hydrocarboné dilué à la vapeur pour générer la charge d'alimentation pour vapocraqueur purifiée et l'eau de purge, dans lequel l'eau de purge comprend de l'eau et des contaminants provenant du matériau hydrocarboné dilué à la vapeur, et dans lequel une majorité de l'eau de purge est transmise au module de fractionnement pour être convertie en vapeur pour une utilisation dans la tour de fractionnement, le reste de l'eau de purge quittant le système pour empêcher l'accumulation de contaminants.

12. Procédé selon la revendication 11, dans lequel la première section est décalée verticalement par rapport à la seconde section pendant que la tour de fractionnement est en cours d'utilisation, dans lequel la rectification du matériau hydrocarboné hydrogéné est effectuée dans la seconde section de telle sorte que des contaminants dans le matériau hydrocarboné hydrogéné sont combinés avec de l'eau condensée provenant de l'environnement de vapeur de la tour de fractionnement.

13. Procédé selon la revendication 8, dans lequel les résidus d'hydrocarbures lourds sont extraits de la première section, et dans lequel les résidus d'hydrocarbures lourds ont un premier point d'ébullition supérieur à un second point d'ébullition du matériau hydrocarboné dilué à la vapeur.
